# EUROPEAN PATENT SPECIFICATION

(11) **EP 4 336 634 B1**
(45) Date of publication and mention of the grant of the patent: **17.12.2025**
(21) Application number: 23187771.3
(22) Date of filing: 26.07.2023
(51) Int. Cl.: H01M 50/176, H01M 50/15, H01M 50/184, H01M 50/188, H01M 50/553, H01M 50/627, H01M 50/103, H01M 50/193, H01M 50/55, H01M 10/04

(54) **BATTERY CELL AND METHOD OF MANUFACTURING SAME**
BATTERIEZELLE UND VERFAHREN ZUR HERSTELLUNG DAVON
ÉLÉMENT DE BATTERIE ET SON PROCÉDÉ DE FABRICATION

(30) Priority: 30.08.2022 JP 2022136592
(43) Date of publication of application: 13.03.2024
(73) Proprietor: Prime Planet Energy & Solutions, Inc., Tokyo 103-0022 (JP)
(72) Inventor: KARASUNO, Kaito, Tokyo, 103-0022 (JP); TAKABAYASHI, Hiroshi, Tokyo, 103-0022 (JP)
(74) Representative: Kuhnen & Wacker Patent- und Rechtsanwaltsbüro PartG mbB

(56) References cited:
- EP-A1- 4 203 174
- JP-A- 2021 086 813
- US-A1- 2019 067 649
- US-A1- 2019 237 742

## Description

### BACKGROUND OF THE INVENTION

### Field of the Invention

The present technology relates to a battery cell and a method of manufacturing the battery cell.

### Description of the Background Art

JP 2019-129129 A discloses a battery provided with a tubular body communicating with a liquid injection hole for injecting an electrolyte solution into a housing of a battery cell. Here, by providing a shielding portion interposed between the liquid injection hole and an electrode assembly, a separator can be suppressed from being turned over by the injection of the electrolyte solution and an electrical short circuit resulting therefrom can be suppressed.

JP 2021-86813 A discloses that at least a portion of each of a case member and a current collecting terminal of a battery in contact with an insulating material is processed to have a rough surface, thus resulting in an improved anchor effect.

US 2019/237742 A1 and EP 4 203 174 A1, which is prior art under Art. 54(3) EPC, disclose a battery according to the preamble of claim 1. From US 2019/067649 A1, a cap assembly for the secondary battery can be taken which includes a cap plate having an electrode lead-out hole; and a terminal assembly including a terminal board, a fixing member, a deformable sheet, a conductive sheet and an isolator, wherein the deformable sheet is attached to the terminal board; the conductive sheet includes a first portion provided between the terminal board and the cap plate; the terminal board is fixed to a side of the cap plate through the fixing member and covers the electrode lead-out hole, and the terminal board is electrically connected with the first portion through the deformable sheet; the deformable sheet is configured to deform to be electrically disconnected from the first portion in response to an increase in a pressure inside the secondary battery.

### SUMMARY OF THE INVENTION

By providing the insulating member provided with the tubular body, the number of components of the battery is increased. Further, it has been required to reduce the number of assembling steps at the time of manufacturing the battery.

It is an object of the present technology to provide a battery cell and a method of manufacturing the battery cell so as to suppress a separator from being turned over at the time of injection of an electrolyte solution and suppress a short circuit resulting therefrom, while reducing the number of assembling steps.

The present technology provides a battery cell and a method of manufacturing the battery cell as follows.

A battery cell comprising: an electrode assembly including a positive electrode plate and a negative electrode plate; an exterior container that is provided with an opening and that accommodates the electrode assembly; a sealing plate that is provided with a terminal portion insertion hole and an electrolyte solution injection hole and that seals the opening of the exterior container; a terminal portion that extends through the terminal portion insertion hole; a current collector electrically connected to the positive electrode plate or the negative electrode plate; and a resin insulator having a first portion, a second portion, and a third portion, the first portion being a portion that insulates the terminal portion and the sealing plate from each other outside the exterior container, the second portion being a portion that insulates the current collector and the sealing plate from each other inside the exterior container, the third portion being a portion that has a tubular shape and that communicates with the electrolyte solution injection hole, wherein the third portion of the resin insulator includes a shielding portion that shields between at least a portion of the electrolyte solution injection hole and the electrode assembly, and the first portion, the second portion, and the third portion of the resin insulator are molded to be integrated together. At least a portion of a contact surface of the terminal portion or the sealing plate with the resin insulator has a rough surface.

In the battery cell set forth above, the terminal portion and the resin insulator are integrated together by insert molding.

In the battery cell set forth above, the shielding portion includes a strip-shaped portion formed to extend across the third portion having the tubular shape.

In the battery cell set forth above, a through hole is formed in the strip-shaped portion of the shielding portion.

In the battery cell set forth above, the strip-shaped portion includes a first strip-shaped portion extending in a first direction and a second strip-shaped portion extending in a direction intersecting the first direction.

In the battery cell set forth above, the shielding portion includes a portion formed to have a substantially polygonal shape.

In the battery cell set forth above, the shielding portion is formed only on one side with respect to a center of the third portion having the tubular shape.

A method of manufacturing a battery cell, the method comprising: forming an electrode assembly including a positive electrode plate and a negative electrode plate; electrically connecting the positive electrode plate or the negative electrode plate and a current collector to each other; attaching a terminal portion and a resin insulator to a sealing plate provided with an electrolyte solution injection hole; connecting the current collector and the terminal portion to each other; accommodating the electrode assembly in an exterior container provided with an opening; sealing the opening of the exterior container with the sealing plate; and injecting an electrolyte solution into the exterior container via the electrolyte solution injection hole, wherein the resin insulator has a first portion, a second portion, and a third portion, the first portion being a portion that insulates the terminal portion and the sealing plate from each other outside the exterior container, the second portion being a portion that insulates the current collector and the sealing plate from each other inside the exterior container, the third portion being a portion that has a tubular shape and that communicates with the electrolyte solution injection hole, the third portion of the resin insulator includes a shielding portion that shields between at least a portion of the electrolyte solution injection hole and the electrode assembly, and the first portion, the second portion, and the third portion of the resin insulator are molded to be integrated together. The method further comprising providing a rough surface in at least a portion of a contact surface of the terminal portion or the sealing plate with the resin insulator.

In the method of manufacturing the battery cell set forth above, the terminal portion and the resin insulator are integrated together by insert molding.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a battery cell.
Fig. 2 is a plan view of a positive electrode plate included in an electrode assembly.
Fig. 3 is a plan view of a negative electrode plate included in the electrode assembly.
Fig. 4 is a plan view showing the electrode assembly including the positive electrode plate and the negative electrode plate.
Fig. 5 is a diagram showing a structure of connection between the electrode assembly and each of a positive electrode current collecting member and a negative electrode current collecting member.
Fig. 6 is a perspective view showing a state in which electrode terminals are attached to a sealing plate.
Fig. 7 is a cross sectional view showing a state in which a positive electrode terminal is attached to the sealing plate.
Fig. 8 is a first diagram showing an exemplary shape of a shielding portion located between a liquid injection hole and the electrode assembly.
Fig. 9 is a second diagram showing an exemplary shape of the shielding portion located between the liquid injection hole and the electrode assembly.
Fig. 10 is a third diagram showing an exemplary shape of the shielding portion located between the liquid injection hole and the electrode assembly.
Fig. 11 is a fourth diagram showing an exemplary shape of the shielding portion located between the liquid injection hole and the electrode assembly.
Fig. 12 is a fifth diagram showing an exemplary shape of the shielding portion located between the liquid injection hole and the electrode assembly.
Fig. 13 is a sixth diagram showing an exemplary shape of the shielding portion located between the liquid injection hole and the electrode assembly.
Fig. 14 is a seventh diagram showing an exemplary shape of the shielding portion located between the liquid injection hole and the electrode assembly.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the "battery cell" can be mounted on vehicles such as a hybrid electric vehicle (HEV), a plug-in hybrid electric vehicle (PHEV), and a battery electric vehicle (BEV). It should be noted that the use of the "battery cell" is not limited to the use in a vehicle.

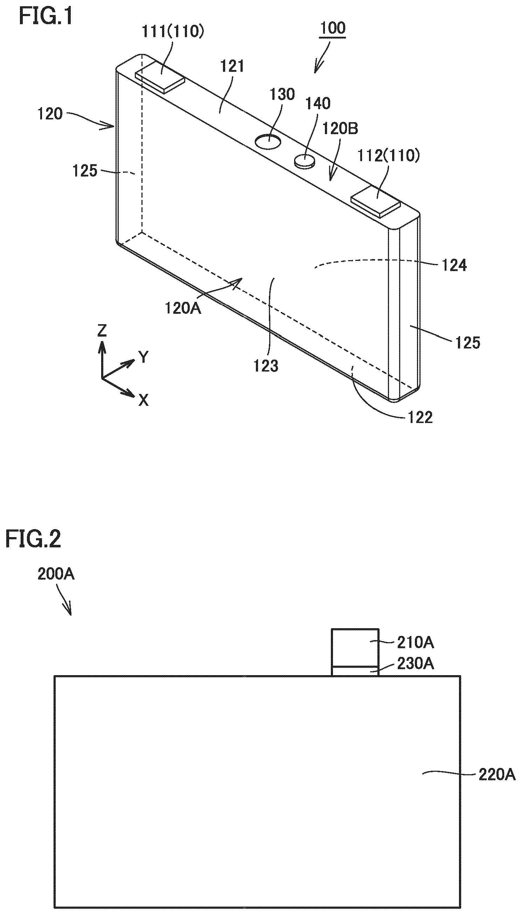

Fig. 1 is a perspective view showing a battery cell 100. As shown in Fig. 1, battery cell 100 has a prismatic shape. Battery cell 100 has an electrode terminal 110 (terminal portion), a housing 120 (exterior container), a gas-discharge valve 130, and a rivet 140.

Electrode terminals 110 are formed on housing 120. Electrode terminals 110 have a positive electrode terminal 111 and a negative electrode terminal 112 arranged side by side along an X axis direction (second direction) orthogonal to a Y axis direction (first direction). Positive electrode terminal 111 and negative electrode terminal 112 are provided to be separated from each other in the X axis direction.

Housing 120 has a rectangular parallelepiped shape and forms an external appearance of battery cell 100. Housing 120 includes: a case main body 120A that accommodates an electrode assembly (not shown) and an electrolyte solution (not shown); and a sealing plate 120B that seals an opening of case main body 120A. Sealing plate 120B is joined to case main body 120A by welding.

Housing 120 has an upper surface 121, a lower surface 122, a first side surface 123, a second side surface 124, and two third side surfaces 125.

Upper surface 121 is a flat surface orthogonal to a Z axis direction (third direction) orthogonal to the Y axis direction and the X axis direction. Electrode terminals 110 are disposed on upper surface 121. Lower surface 122 faces upper surface 121 along the Z axis direction.

Each of first side surface 123 and second side surface 124 is constituted of a flat surface orthogonal to the Y axis direction. Each of first side surface 123 and second side surface 124 has the largest area among the areas of the plurality of side surfaces of housing 120. Each of first side surface 123 and second side surface 124 has a quadrangular shape when viewed in the Y axis direction. Each of first side surface 123 and second side surface 124 has a quadrangular shape in which the X axis direction corresponds to the long-side direction and the Z axis direction corresponds to the shortside direction when viewed in the Y axis direction.

A plurality of battery cells 100 are stacked such that first side surfaces 123 of battery cells 100, 100 adjacent to each other in the Y axis direction face each other and second side surfaces 124 of battery cells 100, 100 adjacent to each other in the Y axis direction face each other. Thus, positive electrode terminals 111 and negative electrode terminals 112 are alternately arranged in the Y axis direction in which the plurality of battery cells 100 are stacked.

Gas-discharge valve 130 is provided in upper surface 121. When the temperature of battery cell 100 is increased (thermal runaway) and internal pressure of housing 120 becomes more than or equal to a predetermined value due to gas generated inside housing 120, gas-discharge valve 130 discharges the gas to outside of housing 120.

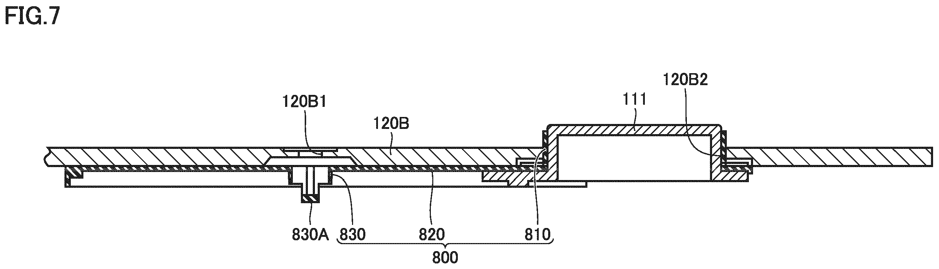

Rivet 140 is attached to sealing plate 120B of housing 120. Rivet 140 seals an electrolyte solution injection hole (see Fig. 7) described later.

Fig. 2 is a plan view of a positive electrode plate 200A included in electrode assembly 200. Positive electrode plate 200A has a main body portion 220A in which a positive electrode active material composite layer is formed on each of both surfaces of a positive electrode core body constituted of an aluminum foil having a quadrangular shape, the positive electrode active material composite layer including a positive electrode active material (for example, lithium-nickel-cobalt-manganese composite oxide or the like), a binder (polyvinylidene difluoride (PVdF) or the like), and a conductive material (for example, a carbon material or the like). The positive electrode core body protrudes from an end side of the main body portion, and the positive electrode core body thus protruding constitutes positive electrode tab 210A. A positive electrode protection layer 230A including alumina particles, a binder, and a conductive material is provided on positive electrode tab 210A at a portion adjacent to main body portion 220A. Positive electrode protection layer 230A has an electric resistance larger than that of the positive electrode active material composite layer. The positive electrode active material composite layer may include no conductive material. Positive electrode protection layer 230A may not be necessarily provided.

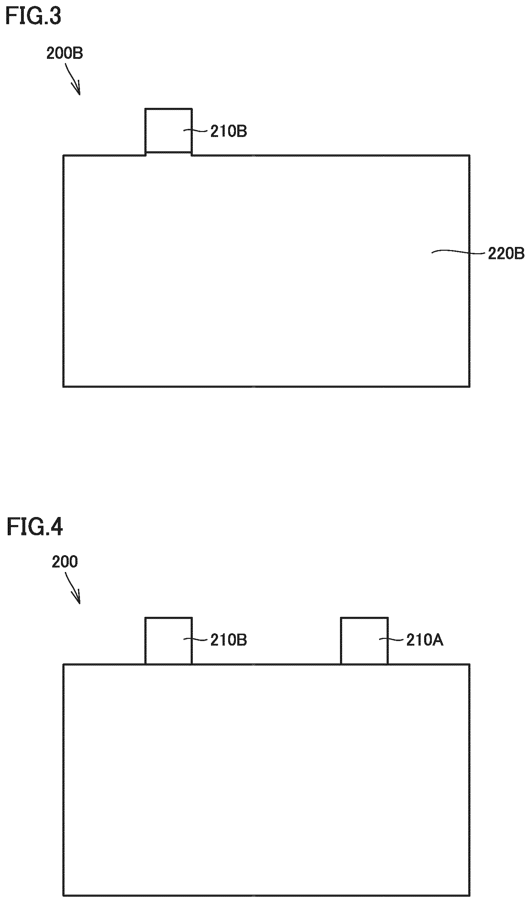

Fig. 3 is a plan view of a negative electrode plate 200B included in electrode assembly 200. Negative electrode plate 200B has a main body portion 220B in which a negative electrode active material composite layer is formed on each of both surfaces of a negative electrode core body constituted of a copper foil having a quadrangular shape. The negative electrode core body protrudes from an end side of main body portion 220B, and the negative electrode core body thus protruding constitutes negative electrode tab 210B.

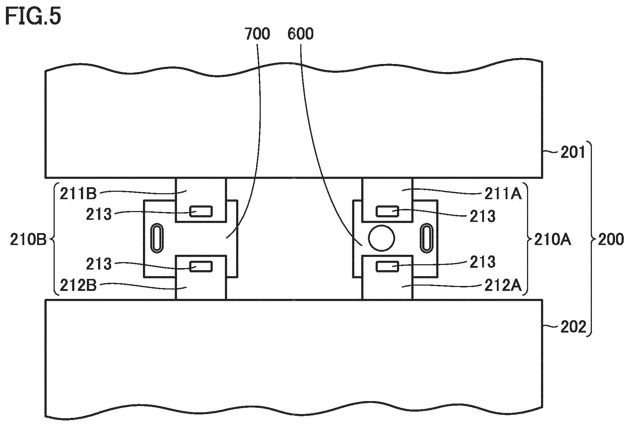

Fig. 4 is a plan view showing electrode assembly 200 including positive electrode plates 200A and negative electrode plates 200B. As shown in Fig. 5, electrode assembly 200 is produced such that positive electrode tabs 210A of positive electrode plates 200A are stacked and negative electrode tabs 210B of negative electrode plates 200B are stacked at one end portion of electrode assembly 200. For example, about 50 positive electrode plates 200A and about 50 negative electrode plates 200B are stacked. Positive electrode plates 200A and negative electrode plates 200B are alternately stacked with separators being interposed therebetween, each of the separators being composed of polyolefin, each of the separators having a quadrangular shape. It should be noted that a long separator may be used with the separator being folded in a meandering manner.

Fig. 5 is a diagram showing a structure of connection between electrode assembly 200 and each of a positive electrode current collecting member 600 and a negative electrode current collecting member 700. As shown in Fig. 5, electrode assembly 200 includes a first electrode assembly element 201 (first stack group) and a second electrode assembly element 202 (second stack group). Separators are also disposed on the respective outer surfaces of first electrode assembly element 201 and second electrode assembly element 202.

The plurality of positive electrode tabs 210A of first electrode assembly element 201 constitute a first positive electrode tab group 211A. The plurality of negative electrode tabs 210B of first electrode assembly element 201 constitute a first negative electrode tab group 211B. The plurality of positive electrode tabs 210A of second electrode assembly element 202 constitute a second positive electrode tab group 212A. The plurality of negative electrode tabs 210B of second electrode assembly element 202 constitute a second negative electrode tab group 212B.

Positive electrode current collecting member 600 and negative electrode current collecting member 700 are disposed between first electrode assembly element 201 and second electrode assembly element 202. First positive electrode tab group 211A and second positive electrode tab group 212A are connected onto positive electrode current collecting member 600 by welding, thereby forming welded connection portions 213. First negative electrode tab group 211B and second negative electrode tab group 212B are connected onto negative electrode current collecting member 700 by welding, thereby forming welded connection portions 213. Welded connection portions 213 can be formed by, for example, ultrasonic welding, resistance welding, laser welding, or the like.

When manufacturing battery cell 100, electrode assembly 200 including positive electrode plate 200A and negative electrode plate 200B is formed, and positive electrode plate 200A and negative electrode plate 200B are electrically connected to positive electrode current collecting member 600 and negative electrode current collecting member 700 (current collector), respectively. Next, positive electrode terminal 111 and negative electrode terminal 112 (terminal portion) attached to sealing plate 120B are connected (for example, connected by swaging) to positive electrode current collecting member 600 and negative electrode current collecting member 700, respectively. In this state, electrode assembly 200 is accommodated in case main body 120A, and the opening of case main body 120A is sealed by sealing plate 120B.

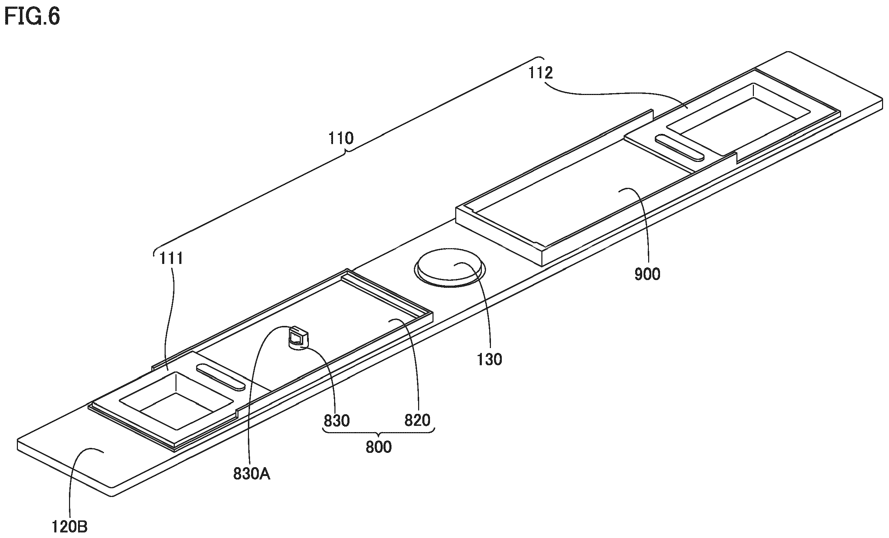

Fig. 6 is a perspective view showing a state in which electrode terminals 110 are attached to sealing plate 120B, and Fig. 7 is a cross sectional view showing the state (the positive electrode terminal 111 side) in Fig. 6.

As shown in Figs. 6 and 7, sealing plate 120B is provided with an electrolyte solution injection hole 120B1 and a terminal portion insertion hole 120B2.

Each of electrode terminals 110 (Fig. 7 shows positive electrode terminal 111) is inserted in terminal portion insertion hole 120B2. After the opening of case main body 120A is sealed by sealing plate 120B, the electrolyte solution is injected into housing 120 through electrolyte solution injection hole 120B1.

Together with electrode terminals 110 (positive electrode terminal 111 and negative electrode terminal 112), resin insulators 800, 900 are attached to sealing plate 120B. Positive electrode terminal 111 and negative electrode terminal 112 may be respectively integrated with resin insulators 800, 900 by insert molding.

Resin insulator 800 has a first portion 810, a second portion 820, and a third portion 830, first portion 810 being a portion that insulates positive electrode terminal 111 and sealing plate 120B from each other outside housing 120, second portion 820 being a portion that insulates positive electrode current collecting member 600 and sealing plate 120B from each other inside housing 120, third portion 830 being a portion that has a tubular shape and that communicates with electrolyte solution injection hole 120B1.

Third portion 830 of resin insulator 800 includes a shielding portion 830A that shields between at least a portion of electrolyte solution injection hole 120B1 and electrode assembly 200. First portion 810, second portion 820, and third portion 830 are molded to be integrated together.

Since third portion 830 of resin insulator 800 includes shielding portion 830A that shields between at least the portion of electrolyte solution injection hole 120B1 and electrode terminal 110, the separator can be suppressed from being turned over at the time of injection of the electrolyte solution and an electrical short circuit resulting therefrom can be suppressed.

On the other hand, by providing the tubular body, i.e., the tubular portion (corresponding to third portion 830) that communicates with electrolyte solution injection hole 120B1, the number of components of battery cell 100 can be increased. Further, it has been required to reduce the number of steps of assembling components at the time of manufacturing battery cell 100.

In battery cell 100 according to the present embodiment, since resin insulator 800 is integrally molded to have first portion 810 that insulates positive electrode terminal 111 and sealing plate 120B from each other outside housing 120, second portion 820 that insulates positive electrode current collecting member 600 and sealing plate 120B from each other inside housing 120, and third portion 830 that has a tubular shape and that communicates with electrolyte solution injection hole 120B1, the number of components of battery cell 100 and the number of steps of assembling components can be reduced. As a result, battery cell 100 can be manufactured at low cost while suppressing the separator from being turned over at the time of injection of the electrolyte solution.

At least a portion of a contact surface of each of electrode terminal 110 and sealing plate 120B with each of resin insulators 800, 900 has a rough surface. Since the rough surface is provided, adhesion between each of electrode terminal 110 and sealing plate 120B and each of resin insulators 800, 900 can be improved by an anchor effect.

The structures of electrode terminal 110, sealing plate 120B, and resin insulator 800 are not limited to those shown in Figs. 6 and 7, and for example, electrode terminal 110 may have a current interrupt device (CID).

In the example of Figs. 6 and 7, it has been illustratively described that resin insulator 800 on the positive electrode terminal 111 side and resin insulator 900 on the negative electrode terminal 112 side are separately formed, and third portion 830 that has a tubular shape and that communicates with electrolyte solution injection hole 120B1 is provided in the resin insulator on the positive electrode terminal 111 side; however, the scope of the present technology is not limited thereto. For example, the tubular portion (corresponding to third portion 830) communicating with electrolyte solution injection hole 120B1 may be provided in resin insulator 900 on the negative electrode terminal 112 side, or resin insulators 800, 900 may be provided as one member.

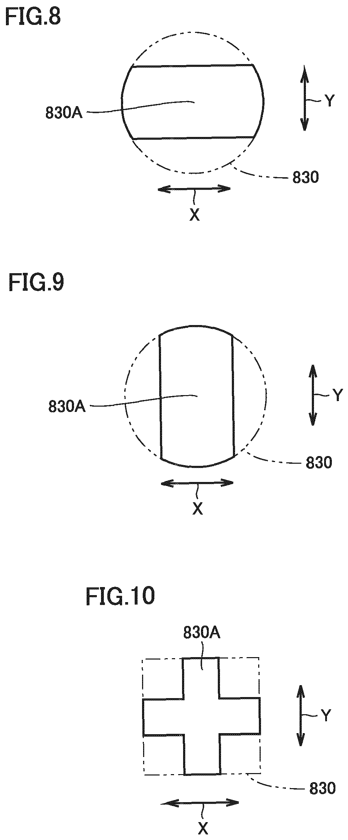

Figs. 8 to 14 show exemplary shapes of shielding portion 830A. It should be noted that the shape of shielding portion 830A shown in each of Figs. 8 to 14 is one example, and the scope of the present technology is not limited thereto.

In the example shown in each of Figs. 8 and 9, shielding portion 830A is constituted of a strip-shaped portion formed to extend across third portion 830 having the tubular shape. In the example of Fig. 8, the strip-shaped portion extends in the X axis direction, whereas in the example of Fig. 9, the strip-shaped portion extends in the Y axis direction.

The strip-shaped portion may extend in an oblique direction intersecting each of the X axis direction and the Y axis direction. The width of the strip-shaped portion can be appropriately changed. Further, the strip-shaped portion may be formed to be separated into a plurality of portions.

In the example of each of Figs. 8 and 9, the strip-shaped portion is formed in a region including the center of third portion 830 having the tubular shape; however, the scope of the present technology is not limited thereto.

As in the example of Fig. 10, the strip-shaped portion may include a first strip-shaped portion extending in the Y axis direction and a second strip-shaped portion extending in the X axis direction. In the example of Fig. 10, the shape of cross is shown in which the first strip-shaped portion and the second strip-shaped portion are substantially orthogonal to each other; however, the first strip-shaped portion and the second strip-shaped portion may intersect each other obliquely.

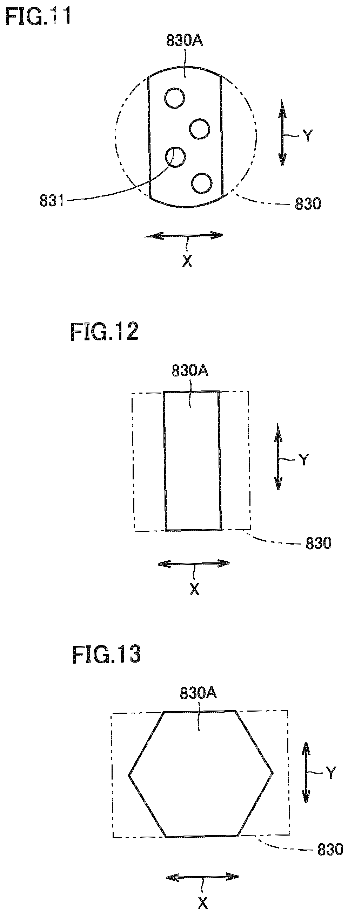

As in the example of Fig. 11, a through hole 831 may be formed in the strip-shaped portion. The position, shape, and size of through hole 831 may be appropriately changed. A plurality of through holes 831 may be provided as shown in Fig. 11, or only one through hole 831 may be provided.

As in the example of Fig. 12, shielding portion 830A may be in the form of a rectangle (quadrangle). Further, the tubular shape of third portion 830 of resin insulator 800 is not limited to the circular shape, and may be a quadrangular shape as shown in Fig. 12.

As in the example of Fig. 13, shielding portion 830A may be formed to have a substantially polygonal shape including a shape other than a quadrangular shape. The substantially polygonal shape is not a complete polygon, and includes, for example, a shape with a corner portion processed to be rounded or processed to be chamfered. Further, the substantially polygonal shape is not limited to a regular polygonal shape as in the example of Fig. 13 (regular hexagonal shape).

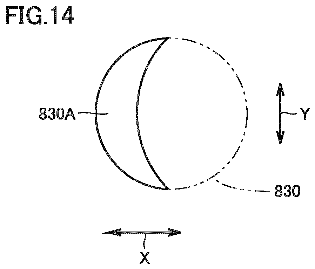

As in the example of Fig. 14, shielding portion 830A may be formed only on one side with respect to the center of third portion 830 having the tubular shape. In the example of Fig. 14, shielding portion 830A has a substantially crescent shape; however, the shape of shielding portion 830A can be appropriately changed also when shielding portion 830A is formed only on one side with respect to the center of third portion 830 having the tubular shape.

Although the embodiments of the present invention have been described and illustrated in detail, it is clearly understood that the same is by way of illustration and example only and is not to be taken by way of limitation, the scope of the present invention being defined by the terms of the appended claims.

## Claims

1. A battery cell (100) comprising:
an electrode assembly (200) including a positive electrode plate (200A) and a negative electrode plate (200B);
an exterior container (120A) that is provided with an opening and that accommodates the electrode assembly (200);
a sealing plate (121) that is provided with a terminal portion insertion hole (120B2) and an electrolyte solution injection hole (120B1) and that seals the opening of the exterior container (120A);
a terminal portion (110) that extends through the terminal portion insertion hole (120B2);
a current collector (600, 700) electrically connected to the positive electrode plate (200A) or the negative electrode plate (200B); and
a resin insulator (800) having a first portion (810), a second portion (820), and a third portion (830), the first portion (810) being a portion that insulates the terminal portion (110) and the sealing plate (121) from each other outside the exterior container (120A), the second portion (820) being a portion that insulates the current collector (600, 700) and the sealing plate (121) from each other inside the exterior container (120A), the third portion (830) being a portion that has a tubular shape and that communicates with the electrolyte solution injection hole (120B1),
**characterized in that**
the third portion (830) of the resin insulator (800) includes a shielding portion (830A) that shields between at least a portion of the electrolyte solution injection hole (120B1) and the electrode assembly (200), and
the first portion (810), the second portion (820), and the third portion (830) of the resin insulator (800) are molded to be integrated together,
wherein at least a portion of a contact surface of the terminal portion (110) or the sealing plate (121) with the resin insulator (800) has a rough surface.

2. The battery cell according to claim 1, wherein the terminal portion (110) and the resin insulator (800) are integrated together by insert molding.

3. The battery cell according to claim 1 or 2, wherein the shielding portion (830A) includes a strip-shaped portion formed to extend across the third portion (830) having the tubular shape.

4. The battery cell according to claim 3, wherein a through hole (831) is formed in the strip-shaped portion of the shielding portion (830A).

5. The battery cell according to claim 3 or 4, wherein the strip-shaped portion includes a first strip-shaped portion extending in a first direction and a second strip-shaped portion extending in a direction intersecting the first direction.

6. The battery cell according to claim 1 or 2, wherein the shielding portion (830A) includes a portion formed to have a substantially polygonal shape.

7. The battery cell according to claims 1 or 2, wherein the shielding portion (830A) is formed only on one side with respect to a center of the third portion (830) having the tubular shape.

8. A method of manufacturing a battery cell, the method comprising:
forming an electrode assembly (200) including a positive electrode plate (200A) and a negative electrode plate (200B);
electrically connecting the positive electrode plate (200A) or the negative electrode plate (200B) and a current collector (600, 700) to each other;
attaching a terminal portion (110) and a resin insulator (800) to a sealing plate (121) provided with an electrolyte solution injection hole (120B1);
connecting the current collector (600, 700) and the terminal portion (110) to each other;
accommodating the electrode assembly (200) in an exterior container (120A) provided with an opening;
sealing the opening of the exterior container (120A) with the sealing plate (121); and
injecting an electrolyte solution into the exterior container (120A) via the electrolyte solution injection hole (120B1), wherein
the resin insulator (800) has a first portion (810), a second portion (820), and a third portion (830), the first portion (810) being a portion that insulates the terminal portion (110) and the sealing plate (121) from each other outside the exterior container (120A), the second portion (820) being a portion that insulates the current collector (600, 700) and the sealing plate (121) from each other inside the exterior container (120A), the third portion (830) being a portion that has a tubular shape and that communicates with the electrolyte solution injection hole (120B1),
**characterized in that**
the third portion (830) of the resin insulator (800) includes a shielding portion (830A) that shields between at least a portion of the electrolyte solution injection hole (120B1) and the electrode assembly (200),
the first portion (810), the second portion (820), and the third portion (830) of the resin insulator (800) are molded to be integrated together, and by
further comprising providing a rough surface in at least a portion of a contact surface of the terminal portion (110) or the sealing plate (121) with the resin insulator (800).

9. The method of manufacturing the battery cell according to claim 8, wherein the terminal portion (110) and the resin insulator (800) are integrated together by insert molding.

## Patentansprüche

1. Batteriezelle (100), aufweisend:
eine Elektrodenanordnung (200) mit einer positiven Elektrodenplatte (200A) und einer negativen Elektrodenplatte (200B);
einen Außenbehälter (120A), der mit einer Öffnung versehen ist und die Elektrodenanordnung (200) aufnimmt;
eine Dichtungsplatte (121), die mit einem Anschlussabschnitts-Einführloch (120B2) und einem Elektrolytlösungs-Einbringungsloch (120B1) versehen ist und die Öffnung des Außenbehälters (120A) abdichtet;
einen Anschlussabschnitt (110), der sich durch das Anschlussabschnitts-Einführloch (120B2) erstreckt;
einen Stromkollektor (600, 700), der mit der positiven Elektrodenplatte (200A) oder der negativen Elektrodenplatte (200B) elektrisch verbunden ist; und
einen Harzisolator (800) mit einem ersten Abschnitt (810), einem zweiten Abschnitt (820) und einem dritten Abschnitt (830), wobei der erste Abschnitt (810) ein Abschnitt ist, der den Anschlussabschnitt (110) und die Dichtungsplatte (121) außerhalb des Außenbehälters (120A) voneinander isoliert, wobei der zweite Abschnitt (820) ein Abschnitt ist, der den Stromkollektor (600, 700) und die Dichtungsplatte (121) innerhalb des Außenbehälters (120A) voneinander isoliert, wobei der dritte Abschnitt (830) ein Abschnitt ist, der eine röhrenförmige Gestalt aufweist und mit dem Elektrolytlösungs-Einbringungsloch (120B1) in Verbindung steht,
**dadurch gekennzeichnet, dass**
der dritte Abschnitt (830) des Harzisolators (800) einen Abschirmungsabschnitt (830A) umfasst, der zwischen mindestens einem Abschnitt des Elektrolytlösungs-Einbringungslochs (120B1) und der Elektrodenanordnung (200) abschirmt, und
der erste Abschnitt (810), der zweite Abschnitt (820) und der dritte Abschnitt (830) des Harzisolators (800) so geformt sind, dass sie miteinander integriert sind,
wobei mindestens ein Abschnitt einer Kontaktoberfläche des Anschlussabschnitts (110) oder der Dichtungsplatte (121) mit dem Harzisolator (800) eine raue Oberfläche aufweist.

2. Batteriezelle nach Anspruch 1, wobei der Anschlussabschnitt (110) und der Harzisolator (800) durch Einsatzformung miteinander verbunden sind.

3. Batteriezelle nach Anspruch 1 oder 2, wobei der Abschirmungsabschnitt (830A) einen streifenförmigen Abschnitt umfasst, der so ausgebildet ist, dass er sich über den dritten Abschnitt (830) mit der röhrenförmigen Gestalt erstreckt.

4. Batteriezelle nach Anspruch 3, wobei in dem streifenförmigen Abschnitt des Abschirmungsabschnitts (830A) ein Durchgangsloch (831) ausgebildet ist.

5. Batteriezelle nach Anspruch 3 oder 4, wobei der streifenförmige Abschnitt einen ersten streifenförmigen Abschnitt, der sich in einer ersten Richtung erstreckt, und einen zweiten streifenförmigen Abschnitt beinhaltet, der sich in einer Richtung erstreckt, die die erste Richtung schneidet.

6. Batteriezelle nach Anspruch 1 oder 2, wobei der Abschirmungsabschnitt (830A) einen Abschnitt umfasst, der so ausgebildet ist, dass er eine im Wesentlichen polygonale Form aufweist.

7. Batteriezelle nach Anspruch 1 oder 2, wobei der Abschirmungsabschnitt (830A) nur auf einer Seite in Bezug auf eine Mitte des dritten Abschnitts (830) mit der röhrenförmigen Gestalt ausgebildet ist.

8. Verfahren zur Herstellung einer Batteriezelle, wobei das Verfahren folgende Schritte beinhaltet:
Ausbilden einer Elektrodenanordnung (200) mit einer positiven Elektrodenplatte (200A) und einer negativen Elektrodenplatte (200B);
elektrisches Verbinden der positiven Elektrodenplatte (200A) oder der negativen Elektrodenplatte (200B) und eines Stromkollektors (600, 700) miteinander;
Anbringen eines Anschlussabschnitts (110) und eines Harzisolators (800) an einer Dichtungsplatte (121), die mit einem Elektrolytlösungs-Einbringungsloch (120B1) versehen ist;
Verbinden des Stromkollektors (600, 700) und des Anschlussabschnitts (110) miteinander; Unterbringen der Elektrodenanordnung (200) in einem Außenbehälter (120A), der mit einer Öffnung versehen ist;
Abdichten der Öffnung des Außenbehälters (120A) mit der Dichtungsplatte (121); und
Einbringen einer Elektrolytlösung in den Außenbehälter (120A) über das Elektrolytlösungs-Einbringungsloch (120B1), wobei
der Harzisolator (800) einen ersten Abschnitt (810), einen zweiten Abschnitt (820) und einen dritten Abschnitt (830) aufweist, wobei der erste Abschnitt (810) ein Abschnitt ist, der den Anschlussabschnitt (110) und die Dichtungsplatte (121) außerhalb des Außenbehälters (120A) voneinander isoliert, wobei der zweite Abschnitt (820) ein Abschnitt ist, der den Stromkollektor (600, 700) und die Dichtungsplatte (121) innerhalb des Außenbehälters (120A) voneinander isoliert, wobei der dritte Abschnitt (830) ein Abschnitt ist, der eine röhrenförmige Gestalt aufweist und mit dem Elektrolytlösungs-Einbringungsloch (120B1) in Verbindung steht,
**dadurch gekennzeichnet, dass**
der dritte Abschnitt (830) des Harzisolators (800) einen Abschirmabschnitt (830A) umfasst, der zwischen mindestens einem Abschnitt des Elektrolytlösungs-Einbringungslochs (120B1) und der Elektrodenanordnung (200) abschirmt,
der erste Abschnitt (810), der zweite Abschnitt (820) und der dritte Abschnitt (830) des Harzisolators (800) so geformt sind, dass sie miteinander integriert sind, und dadurch, dass
weiterhin eine raue Oberfläche in mindestens einem Abschnitt einer Kontaktfläche des Anschlussabschnitts (110) oder der Dichtungsplatte (121) mit dem Harzisolator (800) vorgesehen ist.

9. Verfahren zur Herstellung der Batteriezelle nach Anspruch 8, wobei der Anschlussabschnitt (110) und der Harzisolator (800) durch Einsatzformung miteinander integriert werden.

## Revendications

1. Une cellule de batterie (100) comprenant :
un ensemble d'électrodes (200) comprenant une plaque d'électrode positive (200A) et une plaque d'électrode négative (200B) ;
un conteneur extérieur (120A) muni d'une ouverture et qui loge l'ensemble d'électrodes (200) ;
une plaque d'étanchéité (121) qui est pourvue d'un trou d'insertion de partie terminale (120B2) et d'un trou d'injection de solution électrolytique (120B1) et qui rend étanche l'ouverture du conteneur extérieur (120A) ;
une partie terminale (110) qui s'étend à travers le trou d'insertion de partie terminale (120B2) ;
un collecteur de courant (600, 700) connecté électriquement à la plaque d'électrode positive (200A) ou à la plaque d'électrode négative (200B) ; et
un isolant en résine (800) comportant une première partie (810), une deuxième partie (820) et une troisième partie (830), la première partie (810) étant une partie qui isole la partie terminale (110) et la plaque d'étanchéité (121) l'une de l'autre à l'extérieur du conteneur extérieur (120A), la deuxième partie (820) étant une partie qui isole le collecteur de courant (600, 700) et la plaque d'étanchéité (121) l'un de l'autre à l'intérieur du conteneur extérieur (120A), la troisième partie (830) étant une partie qui a une forme tubulaire et qui communique avec le trou d'injection de solution électrolytique (120B1),
**caractérisée en ce que**
la troisième partie (830) de l'isolateur en résine (800) comprend une partie de blindage (830A) qui assure le blindage entre au moins une partie du trou d'injection de solution électrolytique (120B1) et l'ensemble d'électrodes (200), et
la première partie (810), la deuxième partie (820) et la troisième partie (830) de l'isolateur en résine (800) sont moulées de manière à être intégrées ensemble,
dans laquelle au moins une partie d'une surface de contact de la partie terminale (110) ou de la plaque d'étanchéité (121) avec l'isolateur en résine (800) présente une surface rugueuse.

2. La cellule de batterie selon la revendication 1, dans laquelle la partie terminale (110) et l'isolant en résine (800) sont intégrés ensemble par moulage par insertion.

3. La cellule de batterie selon la revendication 1 ou 2, dans laquelle la partie de blindage (830A) comprend une partie en forme de bande formée pour s'étendre à travers la troisième partie (830) ayant la forme tubulaire.

4. La cellule de batterie selon la revendication 3, dans laquelle un trou traversant (831) est formé dans la partie en forme de bande de la partie de blindage (830A).

5. La cellule de batterie selon la revendication 3 ou 4, dans laquelle la partie en forme de bande comprend une première partie en forme de bande s'étendant dans une première direction et une deuxième partie en forme de bande s'étendant dans une direction croisant la première direction.

6. La cellule de batterie selon la revendication 1 ou 2, dans laquelle la partie de blindage (830A) comprend une partie formée pour avoir une forme sensiblement polygonale.

7. La cellule de batterie selon les revendications 1 ou 2, dans laquelle la partie de blindage (830A) est formée uniquement sur un côté par rapport au centre de la troisième partie (830) ayant la forme tubulaire.

8. Un procédé de fabrication d'une cellule de batterie, le procédé comprenant :
former un ensemble d'électrodes (200) comprenant une plaque d'électrode positive (200A) et une plaque d'électrode négative (200B) ;
connecter électriquement la plaque d'électrode positive (200A) ou la plaque d'électrode négative (200B) et un collecteur de courant (600, 700) l'un à l'autre ;
fixer une partie terminale (110) et un isolant en résine (800) à une plaque d'étanchéité (121) pourvue d'un trou d'injection de solution électrolytique (120B1) ;
connecter le collecteur de courant (600, 700) et la partie terminale (110) l'un à l'autre ;
loger l'ensemble d'électrodes (200) dans un conteneur extérieur (120A) muni d'une ouverture ;
sceller l'ouverture du conteneur extérieur (120A) avec la plaque d'étanchéité (121) ; et
injecter une solution électrolytique dans le conteneur extérieur (120A) via le trou d'injection de solution électrolytique (120B1), dans lequel
l'isolant en résine (800) comporte une première partie (810), une deuxième partie (820) et une troisième partie (830), la première partie (810) étant une partie qui isole la partie terminale (110) et la plaque d'étanchéité (121) l'une de l'autre à l'extérieur du conteneur extérieur (120A), la deuxième partie (820) étant une partie qui isole le collecteur de courant (600, 700) et la plaque d'étanchéité (121) l'un de l'autre à l'intérieur du conteneur extérieur (120A), la troisième partie (830) étant une partie qui a une forme tubulaire et qui communique avec le trou d'injection de solution électrolytique (120B1),
**caractérisé en ce que**
la troisième partie (830) de l'isolateur en résine (800) comprend une partie de blindage (830A) qui assure le blindage entre au moins une partie du trou d'injection de solution électrolytique (120B1) et l'ensemble d'électrodes (200),
la première partie (810), la deuxième partie (820) et la troisième partie (830) de l'isolateur en résine (800) sont moulées pour être intégrées ensemble, et en comprenant en outre la fourniture d'une surface rugueuse dans au moins une partie d'une surface de contact de la partie terminale (110) ou de la plaque d'étanchéité (121) avec l'isolateur en résine (800).

9. Le procédé de fabrication de la cellule de batterie selon la revendication 8, dans lequel la partie terminale (110) et l'isolant en résine (800) sont intégrés ensemble par moulage par insertion.
